# EUROPÄISCHE PATENTSCHRIFT

(11) **EP 1 118 030 B1**
(45) Veröffentlichungstag und Bekanntmachung des Hinweises auf die Patenterteilung: **16.04.2003**
(21) Anmeldenummer: 99953677.4
(22) Anmeldetag: 01.09.1999
(51) Int. Cl.: G02B 6/44

(54) **ISOLATOR ZUR DURCHFÜHRUNG EINES AN EINEM PHASENSEIL EINER HOCHSPANNUNGS-FREILEITUNG GEHALTENEN OPTISCHEN KABELS**
ISOLATOR FOR PASSING AN OPTICAL CABLE HELD ON A PHASE LINE OF A HIGH TENSION AERIAL LINE
ISOLATEUR PERMETTANT DE FAIRE PASSER UN CABLE A FIBRES OPTIQUES RETENU SUR UN CABLE DE PHASE D'UNE LIGNE AERIENNE HAUTE TENSION

(30) Priorität: 29.09.1998 DE 19844733
(43) Veröffentlichungstag der Anmeldung: 25.07.2001
(73) Patentinhaber: SIEMENS AKTIENGESELLSCHAFT, 80333 München (DE)
(72) Erfinder: HÖFNER, Roland, D-96328 Küps (DE); KREUTZ, Dieter, D-82031 Grünwald (DE); MAYR, Ernst, D-82319 Starnberg (DE)
(74) Vertreter: Epping Hermann & Fischer
(86) Internationale Anmeldenummer: DE9902764
(87) Internationale Veröffentlichungsnummer: WO00019257

(56) Entgegenhaltungen:
- EP-A- 0 303 740
- DE-A- 3 242 008
- GB-A- 2 064 236
- GB-A- 2 079 069

## Beschreibung

Um eine Gefährdung der Monteure und/oder des Wartungspersonals auszuschließen, muß das von einem Klebeband am Phasenseil einer Hochspannungs-Freileitung gehaltene optische Nachrichtenkabel spannungsfrei, d.h. auf Erdpotential liegend, an die am Mast befestigte Kabelgarnitur herangeführt werden. Der Entkopplung von der Hochspannung des Phasenseils dient üblicherweise ein der Kabelgarnitur vorgelagerter Isolator, durch den man das sog. ADL-(All Dielectric Lash-)Kabel führt. Entsprechende Isolatoren sind aus der EP 0 303 740 A1 und der DE 196 48 755 A1 bekannt. Diese Isolatoren lassen sich allerdings nicht nachträglich an bereits verlegten ADL-Kabeln befestigen.

In DE 32 42 008 A1 ist eine Aufhängevorrichtung beschrieben, die zum Führen von insbesondere Lichtwellen-Leiterseilen verwendet wird. Diese weist ein Führungsteil zum Führen des Lichtwellen-Leiterseiles auf, das an einem Starkstrommasten befestigt ist. Zu beiden Seiten des Führungsteiles ist die Aufhängevorrichtung mit je einem Isolierkörper versehen. Der jeweilige Isolierkörper kann aus einer Mehrzahl von zusammensetzbaren Einzelelementen bestehen.

Gegenstand der Erfindung ist ein Isolator, mit dem sich insbesondere ein bereits verlegtes ADL-Kabel führen und von der Hochspannung des Phasenseils entkoppeln und/oder ein Trennschalter in einfacher Weise überbrücken läßt. Diese Aufgabe wird erfindungsgemäß durch einen die Merkmale des Patentanspruchs 1 aufweisenden Isolator gelöst. Die abhängigen Ansprüche betreffen vorteilhafte Weiterbildungen und Ausgestaltungen des Isolators.

Der vorgeschlagene Isolator enthält zwei ausreichend querund längsstabile, vorzugsweise aus glasfaserverstärktem Kunststoff (GFK) bestehende Halbrohre sowie ein die Halbrohre zumindest teilweise umschließendes, vorzugsweise aus Silikon gefertigtes Isolatorelement. Um die einzelnen Komponenten leichter zusammenfügen und in dieser Position halten zu können, können die Halbrohre und das Isolatorelement jeweils mit einander gegenüberliegenden Führungsstiften bzw. Führungsaufnahmen oder Führungsbohrungen ausgestattet sein.

In eines der Halbrohre kann ein aus dem Halbrohr herausragender GFK-Stab eingeklebt sein, wobei der GFK-Stab und das hindurchzuführende ADL-Kabel vorzugsweise denselben Durchmesser aufweisen.

Zumindest eines der Halbrohre kann außerhalb des vom Isolatorelement abgedeckten Bereichs Füllbohrungen und Entlüftungsbohrungen aufweisen, um den durch die zusammengefügten Hälften gebildeten Hohlraum mit einem hochspannungsfesten, elektrisch isolierenden Material, vorzugsweise einem Epoxidharz (z.B. Protolin), befüllen zu können bzw. die von der Füllmasse verdrängte Luft entweichen zu lassen.

Nach dem Zusammenfügen der beiden Isolatorhälften kann eine geschlitzte, vorzugsweise aus GFK bestehende Hülse auf jedes der beiden zylindrischen Isolatorenden geschoben und mit den Halbrohren verklebt werden.

Bei der Montage des Isolators verwendet man vorzugsweise einen eine ausreichenden Menge eines zweikomponentigen Silikonharzes (vorzugsweise LSR = Liquid Silicone Rubber) enthaltenden Doppelkammerbeutel. Nach dem Anmischen der beiden Komponenten werden das Silikonharz auf die Halbflächen der Silikon-Isolatorelemente aufgebracht, die Isolatorhälften zusammengesteckt, für ca. 5 Minuten auf etwa 100°C erwärmt und dadurch klebend miteinander verbunden. Anschließend wird das als Füllmasse dienende Epoxid-Gießharz, vorzugsweise Protolin 51, über die Füllbohrungen in den endseitig mittels zweier Silikonstopfen abgedichteten Hohlkörper eingebracht, wo es mit dem(n) durch eine Knetmasse (z.B. Prestik) im jeweiligen Halbrohr fixierten ADL-Kabel(n), dem in eines der Halbrohre eingeklebten GFK-Stab und den Isolatorhälften zu einer zugfesten Einheit verschmilzt.

Der Isolator ohne GFK-Stab kann auf Stützen gesetzt oder am Leitungs-/Phasenseil hängend den Mast oder einen Trennschalter überbrücken.

Die Erfindung wird im Folgenden anhand der Zeichnung näher erläutert. Es zeigen:
- Fig. 1: eine Hälfte des Isolators im Querschnitt;
- Fig. 2: beide Hälften des noch nicht befüllten und endseitig abgedichteten Isolators in perspektivischer Darstellung;
- Fig. 3: eine mit einem GFK-Stab versehene Isolatorhälfte und eine endseitig aufzubringende GFK-Hülse, jeweils in perspektivischer Darstellung;
- Fig. 4: die Ansicht nach Fig. 3, einschließlich des in der Isolatorhälfte fixierten Nachrichtenkabels und
- Fig. 5: eine perspektivische Darstellung des zusammengesetzten Isolators während seiner Befüllung mit einem Gießharz.

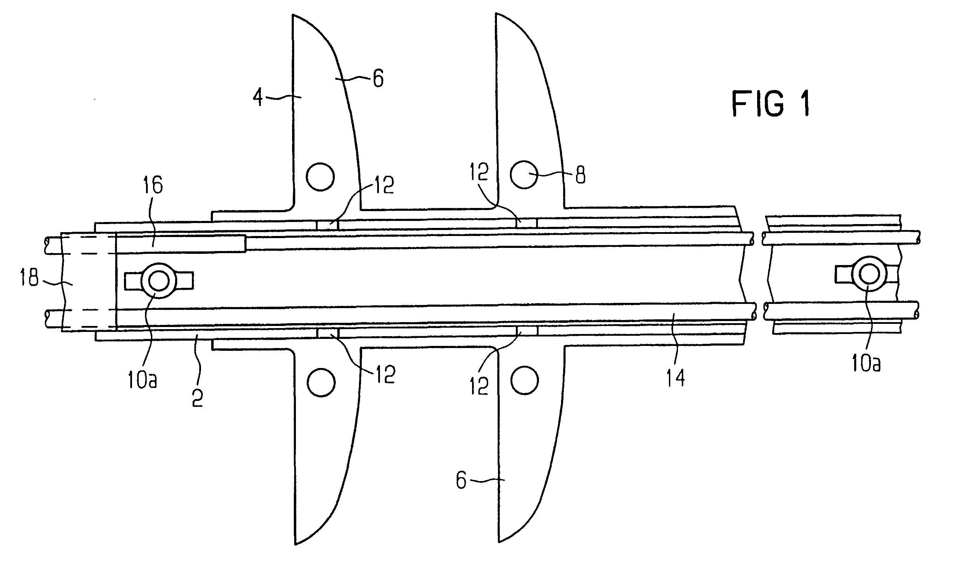

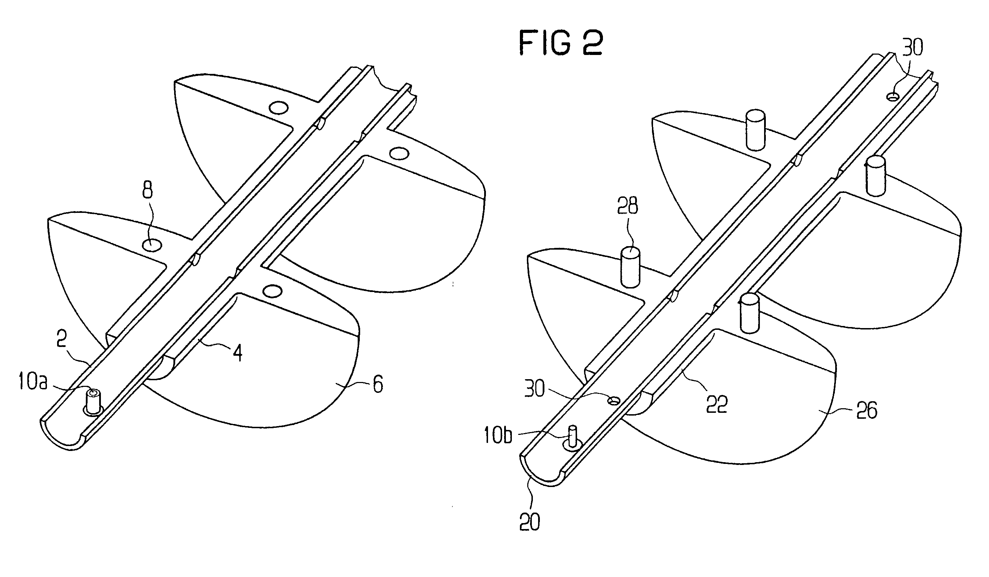

Die in Fig. 1 im Querschnitt dargestellte untere Isolatorhälfte umfaßt ein Halbrohr 2 und ein Isolatorelement 4, welches seinerseits einen unmittelbar am Halbrohr 2 anliegenden, ebenfalls zylindrischen Teil sowie zwei sich rechtwinklig dazu erstreckende, halbscheibenförmig ausgebildete Silikonschirme 6 aufweist. Während das Isolatorelement 4 vorzugsweise aus LSR (Liquid Silicone Rubber) oder einem anderen Silikonmaterial gefertigt ist, besteht das quer und längsstabile Halbrohr 2 aus einem Epoxid- oder Polyesterharz. Die in den Silikonschirmen 6 des Isolatorelements 4 vorhandenen Bohrungen 8 dienen der Aufnahme und Führung der an entsprechenden Stellen des Isolatorelements 22/26 der zweiten Isolatorhälfte vorhandenen Verbindungsstifte 28 (siehe den rechten Teil der Fig. 2). Auch das Halbrohr 2 ist mit hohlzylindrischen Aufnahmen 10a zur Führung der im zweiten Halbrohr vorhandenen Stifte 10b ausgestattet. Darüber hinaus enthält das Halbrohr 2 eine der Befüllung des zusammengesetzten Isolators dienende Bohrung 12. In Fig. 1 sind der in das Halbrohr 2 eingeklebte Epoxid-Stab mit 14 und das durchzuführende, auf Erdpotential zu haltende ADL-Kabel mit 16 bezeichnet. Der Aufbau des Kabels 16 innerhalb des Isolators wird in der DE 196 48 755 A1 ausführlich beschrieben und bedarf hier keiner weiteren Erläuterung. Zwei jeweils aufgeschnittene, d.h. teilbare Silikonstopfen 18 dichten den Isolator endseitig ab.

Die Fig. 2 zeigt beide Isolatorhälften jeweils in perspektivischer Darstellung vor dem Zusammenfügen, wobei gleiche Bezugszeichen entsprechende, in Funktion und Wirkung bereits beschriebene Elemente bezeichnen. Die im rechten Teil der Fig. 2 gezeigte obere Isolatorhälfte besteht wiederum aus einem GFK-Halbrohr 20 und einem aus Silikon gefertigten Isolatorelement 22, welches ein unmittelbar am Halbrohr 20 anliegendes Teil 22 sowie zwei sich rechtwinklig dazu erstrekkende, halbscheibenförmig ausgebildete Silikonschirme 26 aufweist. Die Lage der Führungsstifte 28 auf den Schnittflächen der Silikonschirme 26 korrespondiert zur Position der im Isolatorelement 6 der anderen Isolatorhälfte vorhandenen Führungsbohrungen 8. Die Entlüftung des Isolatorkörpers während der Befüllung erfolgt über die Halbrohr 20 vorhandenen Bohrungen 30. Schließlich zeigt der rechte Teil der Fig. 2 die an einer der Position der Aufnahmen 10a entsprechenden Stelle innerhalb des Halbrohres 20 angeordneten Führungsstifte 10b.

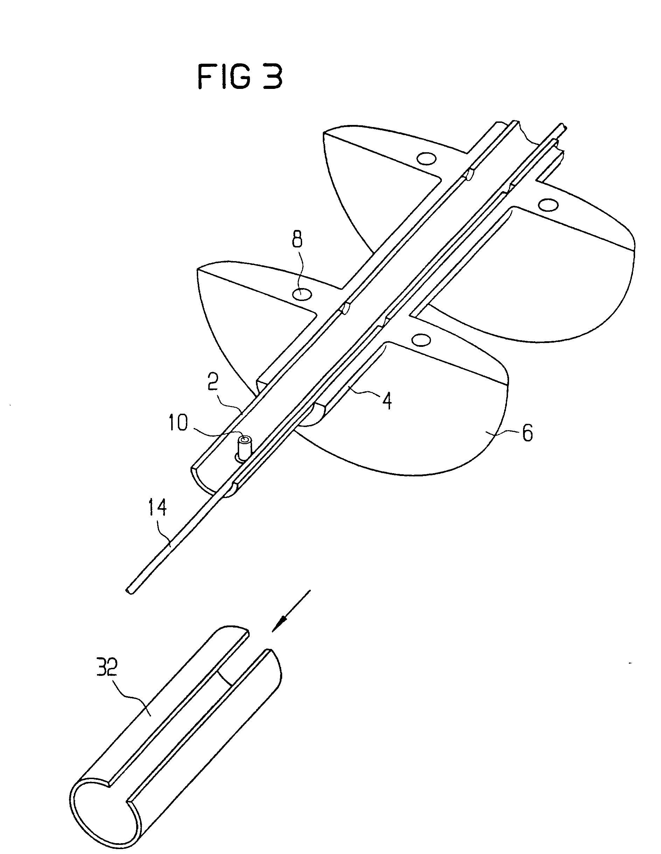

Die Fig. 3 zeigt die untere Isolatorhälfte mit dem darin durch verkleben fixierten GFK-Stab 14, sowie eine der beiden, jeweils geschlitzten GFK-Hülsen 32. Nach dem Zusammenfügen der Isolatorhälften werden diese Hülsen 32 auf die jeweils zylindrischen Enden des Isolators geschoben, gedreht und mit den GFK-Halbrohren 2/20 verklebt.

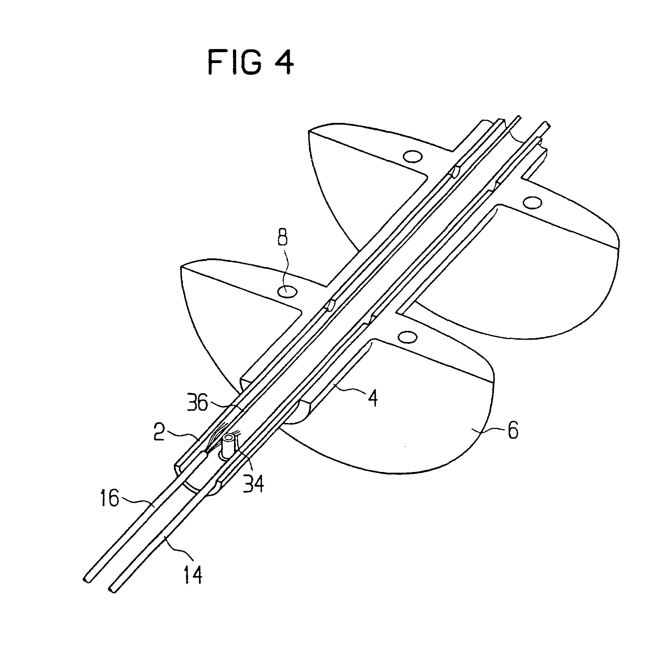

Die Fig. 4 zeigt das in der unteren Isolatorhälfte angeordnete und parallel zum GFK-Stab 14 ausgerichtete ADL-Kabel 16 mit seinem abgesetzten Mantel, dem durchtrennten und gekürzten Aramidgarn 34 sowie der Bündelader 36.

Bei der Montage des Isolators wird vorzugsweise ein beispielsweise 2*50 g eines zweikomponentigen Silikonharzes (vorzugsweise LSR = Liquid Silicone Rubber) enthaltender Doppelkammerbeutel verwendet. Nach dem Anmischen der beiden Komponenten werden das Silikonharz auf die sich gegenüberliegenden Flächen der Isolatorelemente 4,6/22,26 aufgebracht, die Isolatorhälften 4,6/22,26 mit den darin fixierten Halbrohren 2/20 zusammengesteckt, für ca. 5 Minuten auf etwa 100°C erwärmt und dadurch klebend miteinander verbunden. Anschließend wird das als Füllmasse dienende Epoxid-Gießharz, vorzugsweise Protolin 51, über die Füllbohrungen 30 in den endseitig mittels zweier Silikonstopfen 32 abgedichteten Hohlkörper (Halbrohre 2/20) eingebracht, wo es mit dem durch eine Knetmasse(z. B. Prestik) im Halbrohr 2 fixierten ADL-Kabel 16, dem GFK-Stab 14 und den Halbrohren 2/20 zu einer zugfesten Einheit verschmilzt. Beim Befüllen des durch die beiden Halbrohre 2/20 und die Stopfen 32 begrenzten Hohlraums mit Protolin 51 sollte der Isolator waagrecht angeordnet sein.

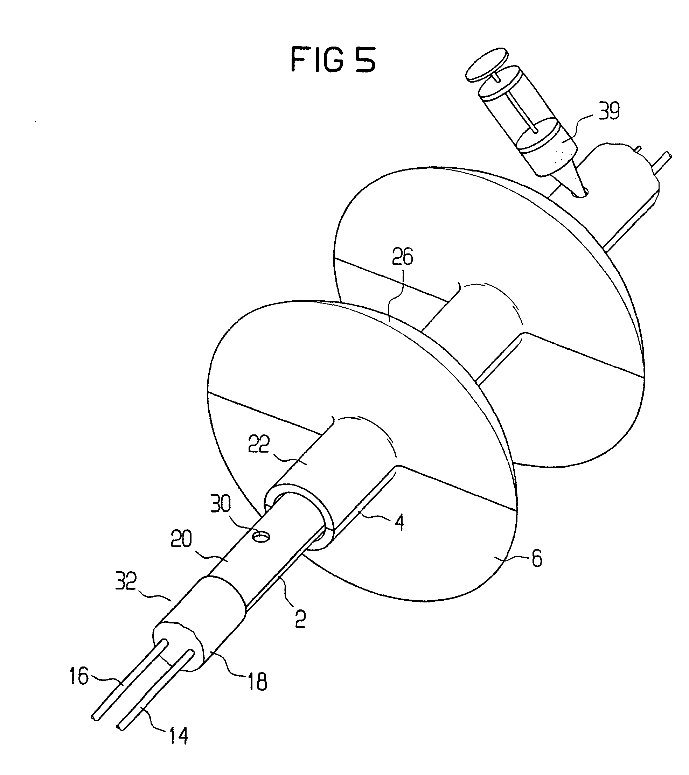

Die Fig. 5 zeigt den im wesentlichen rotationssymmetrisch aufgebauten Isolatorkörper während der Befüllung. Das als Füllmasse dienende Epoxid-Gießharz wird mittels eines Spritzgefäßes 38 über eine Bohrung in den Hohlraum eingebracht, wobei die vom Gießharz verdrängte Luft über die Bohrung 30 entweicht.

## Patentansprüche

1. Isolator zur Durchführung eines an einem Phasenseil einer Hochspannungs-Freileitung gehaltenen optischen Kabels (16), der zweigeteilt ist und dadurch nachträglich um das bereits montierte Kabel (16) gelegt werden kann,
**dadurch gekennzeichnet, daß**
die beiden Isolatorteile jeweils ein sowohl querstabiles als auch längsstabiles Halbrohr (2, 20) sowie jeweils ein dazu separates, das Halbrohr (2, 20) zumindest teilweise umfangendes und mit diesem verbundenes Isolatorelement (4, 26) aufweisen.

2. Isolator nach Anspruch 1,
**dadurch gekennzeichnet, daß**
die Halbrohre (2, 20) aus einem glasfaserverstärkten Kunststoff und die Isolatorelemente (4, 22) aus einem Silikon bestehen.

3. Isolator nach einem der Ansprüche 1 oder 2,
**dadurch gekennzeichnet, daß**
sowohl die Halbrohre (2, 20) als auch die Isolatorelemente (4, 22) jeweils mit korrespondierenden Führungsstiften (10b, 28) und/oder Führungselementen (10a, 8) versehen sind.

4. Isolator nach einem der Ansprüche 1 bis 3,
**dadurch gekennzeichnet, daß**
in eines der Halbrohre (2) ein beidseitig aus diesem herausragender, aus einem zugfesten Material gefertigter Stab (14) eingeklebt ist.

5. Isolator nach Anspruch 4,
**dadurch gekennzeichnet, daß**
der Stab (14) und das durchzuführende optische Kabel (16) annähernd denselben Durchmesser aufweisen.

6. Isolator nach einem der Ansprüche 1 bis 5,
**dadurch gekennzeichnet, daß**
zumindest eines der Halbrohre (2, 20) mit Füllbohrungen und Entlüftungsbohrungen (30) versehen ist.

7. Isolator nach einem der Ansprüche 1 bis 6,
**dadurch gekennzeichnet, daß**
die Isolatorhälften durch auf die Halbrohre (2, 20) schiebbare, geschlitzte Hülsen (32) verbindbar sind.

## Claims

1. Isolator for passing through an optical cable (16) held on a phase line of a high-tension aerial line, which is divided in two and can be subsequently placed around the already installed cable (16), **characterized in that** the two isolator parts have in each case a both transversely stable and longitudinally stable half-tube (2, 20) and also in each case an isolator element (4, 26) which is separate from the said half-tube (2, 20), at least partially encloses it and is connected to it.

2. Isolator according to Claim 1, **characterized in that** the half-tube (2, 20) consists of a glass-fibre-reinforced plastic and the isolator elements (4, 22) consist of a silicone.

3. Isolator according to either of Claims 1 and 2, **characterized in that** both the half-tube (2, 20) and the isolator elements (4, 22) are provided in each case with corresponding guide pins (10b, 28) and/or guide elements (10a, 8).

4. Isolator according to one of Claims 1 to 3, **characterized in that** a rod (14) which is produced from a tension-resistant material and protrudes from one of the half-tubes (2) on both sides is adhesively bonded in it.

5. Isolator according to Claim 4, **characterized in that** the rod (14) and the optical cable (16) to be passed through have approximately the same diameter.

6. Isolator according to one of Claims 1 to 5, **characterized in that** at least one of the half-tubes (2, 20) is provided with filling holes and venting holes (30).

7. Isolator according to one of Claims 1 to 6, **characterized in that** the isolator halves can be connected by slit sleeves (32) which can be pushed onto the half-tubes (2, 20).

## Revendications

1. Isolateur permettant de faire passer un câble (16) à fibres optiques retenu sur un câble de phase d'une ligne aérienne à haute tension, qui est en deux parties et qui peut ainsi être posé ultérieurement autour du câble (16) déjà monté,
**caractérisé en ce que** les deux parties de l'isolateur ont respectivement un demi-tube (2, 20) stable à la fois transversalement et longitudinalement, ainsi que respectivement un élément (4, 26) d'isolateur qui en est distinct, qui entoure au moins en partie le demi-tube (2, 20) et qui est relié à celui-ci.

2. Isolateur suivant la revendication 1, **caractérisé en ce que** les demi-tubes (2, 20) sont en une matière plastique renforcée par de la fibre de verre et les éléments (4, 22) de l'isolateur en une silicone.

3. Isolateur suivant l'une des revendications 1 ou 2, **caractérisé en ce que** tant les demi-tubes (2, 20) que les éléments (4, 22) de l'isolateur sont munis respectivement de broches (10b, 28) correspondantes de guidage et/ou d'éléments (10a, 8) de guidage.

4. Isolateur suivant l'une des revendications 1 à 3, **caractérisé en ce que** dans l'un des demi-tubes (2) est collée une barre (14) qui en fait saillie des deux côtés et qui est en une matière résistante à la traction.

5. Isolateur suivant la revendication 4, **caractérisé en ce que** la barre (14) et le câble (16) à fibre optique qui passe ont sensiblement le même diamètre.

6. Isolateur suivant l'une des revendications 1 à 5, **caractérisé en ce qu'**au moins un des demi-tubes (2, 20) est muni de trous de remplissage et de trous (30) de mise à l'atmosphère.

7. Isolateur suivant l'une des revendications 1 à 6, **caractérisé en ce que** les moitiés d'isolateurs peuvent être reliées par des douilles (32) fendues qui peuvent coulisser sur les demi-tubes (2, 20).
